# EUROPEAN PATENT APPLICATION

(11) **EP 3 293 567 A1**
(43) Date of publication of application: **14.03.2018**
(21) Application number: 16188065.3
(22) Date of filing: 09.09.2016
(51) Int. Cl.: G02C 9/04, G02C 7/08, B29D 12/02

(54) **EYEWEAR COMPRISING EMBEDDED MAGNETS AND METHOD OF MAKING SAME**

(71) Applicant: Okia Optical Company Limited, Kowloon, Hong Kong (CN)
(72) Inventor: ZHANG, Yan, Tsuen Wan, Hong Kong (CN); LAM, Chi Ho, Kowloon, Hong Kong (CN)
(74) Representative: Becker Kurig Straus

(57) **Abstract**

Provided herein are eyewear assemblies comprising a main frame and a secondary frame, wherein both the main frame and secondary frame comprises magnets embedded below the surface of the frames. The secondary frame is removably secured to the main frame by magnetic engagement between the magnets in the main frame and the magnets in the secondary frame when the main frame and the secondary frame are in close contact with each other. Also provided herein are methods of making the eyewear assemblies disclosed herein by injection molding.

## Description

### FIELD OF THE INVENTION

This invention relates to an eyewear assembly comprising a main frame and a secondary frame, wherein both the main frame and secondary frame comprise magnets embedded below the surface of the frames that enable the secondary frame removably secured to the main frame by magnetic engagement. This invention also relates to methods of making the eyewear assembly disclosed herein by injection molding.

### BACKGROUND OF THE INVENTION

Eyewear generally can be used for, *inter alia,* vision correction as well as eye protection from hazards such as UV light or sunlight. People wearing prescription eyewear glasses always wish to control the amount or type of light entering their eyes with light filtering lenses at the same time. Light filtering prescription lenses having different light filtering properties are desired by people wearing prescription eyewear glasses for a variety of outdoor activities, such as reading, sports and driving. Due to the fact that people engaging in various activities daily, it is difficult to find light filtering lenses that can meet the light filtering requirements of all possible daily activities.

One current method at addressing the above mentioned problems involves attaching a secondary frame having lenses of desirable light filtering properties to a main frame having prescription lenses. There are many ways to attach the secondary frame to the main frame. One way is attaching a secondary frame with a mechanical clip of various designs to the main frame. However, the mechanical clip requires for a tight mechanical fit between the secondary frame and the main frame, which may lead to damages to the main frame and/or the secondary frame.

Another method is attaching the secondary frame to the main frame with mating magnets that secure the secondary frame to the main frame. The mating magnets are generally attached externally or embedded in the main frame. This design results in an unattractively main frame having visibly attached magnets and/or cover parts for hiding the magnets.

Therefore, there is always a need for an eyewear assembly comprising a secondary frame that can be removably secured to the main frame without damaging the frames by mechanical clips or impairing their appearance by visibly magnets and/or cover parts for hiding the magnets.

### SUMMARY OF THE INVENTION

In one aspect, provided herein are eyewear assemblies comprising a main frame and a secondary frame, wherein the main frame comprises a frame front, a pair of temples and two or more first magnets separately embedded below the surface of the frame front, each of the temples pivotally attached to the frame front; wherein the secondary frame comprises two or more second magnets separately embedded below the surface of the secondary frame, wherein the secondary frame is removably secured to the main frame by magnetic engagement between the first magnets and the second magnets, and wherein the main frame and the secondary frame are free of cover parts for covering the first magnets and the second magnets respectively.

In some embodiments, the two or more first magnets are embedded below the surface of the frame front by injection molding and the two or more second magnets are embedded below the surface of the secondary frame by injection molding.

In certain embodiments, the main frame is a full rim frame or semi-rimless frame, and the secondary frame is a full rim frame, semi-rimless frame or a rimless frame.

In some embodiments, the frame front further comprises a pair of nose pads.

In certain embodiments, the eyewear assembly disclosed herein further comprises a first pair of lenses mounted on the main frame and a second pair of lenses mounted on the secondary frame.

In some embodiments, each of the first magnets and the second magnets is independently selected from neodymium magnets, bonded neo magnets, samarium-cobalt magnets, alnico magnets, ferrite magnets, exchange spring magnets, magnets made from Mitsujima ka magnetic steel, and combinations thereof. In further embodiments, the main frame comprises 2 first magnets and the secondary frame comprises 2 second magnets.

In certain embodiments, the 2 first magnets are respectively located in the upper right and upper left portions of the frame front and the 2 second magnets are respectively located in the upper right and upper left portions of the secondary frame.

In another aspect, provided herein are methods of making an eyewear frame, such as the main frame or secondary frame disclosed herein, wherein the method comprises the steps of:
a) providing a mold having a cavity, wherein the shape of the cavity corresponds to the shape of the eyewear frame;
b) setting two or more magnets in the mold; and
c) injecting a melt of a polymer composition into the cavity to form the eyewear frame,
wherein the two or more magnets are embedded below the surface of the eyewear frame, wherein the magnets have no pattern or image, and wherein the eyewear frame is free of cover parts for covering the two or more magnets.

In certain embodiments, the method further comprises a step of coating the magnets with a lamination agent before the injecting step.

In some embodiments, the method further comprises a step of setting a patterned layer together with the magnets in the mold before the injecting step.

In certain embodiments, the patterned layer comprises a laminate and a design pattern printed on a surface of the laminate.

In some embodiments, the polymer composition comprises a polymer which is a cellulose ester, a polycarbonate, a polyurethane, a thermoplastic elastomer (TPE), a polyamide or nylon, a polyester, a copolyester or a combination thereof. In certain embodiments, the polymer is cellulose acetate, cellulose acetate propionate, a polycarbonate, a polyamide, a polyester, a copolyester or a combination thereof.

In another aspect, provided herein are methods of making an eyewear frame, wherein the method comprises the steps of:
a) providing a top layer comprising a first pair of cavities, wherein the shape of the top layer corresponds to the shape of the top part of the eyewear frame;
b) providing a bottom layer comprising a second pair of cavities, wherein the shape of the bottom layer corresponds to the shape of the bottom part of the eyewear frame;
c) embedding a pair of magnets in the first pair of cavities and the second pair of cavities; and
d) bonding the top layer and the bottom layer together by applying an adhesive substance, heat, pressure or a combination thereof,
wherein the magnets are embedded below the surface of the eyewear frame, wherein the magnets have no pattern or image, and wherein the eyewear frame is free of cover parts for covering the magnets.

In some embodiments, each of the magnets disclosed herein is independently selected from neodymium magnets, bonded neo magnets, samarium-cobalt magnets, alnico magnets, ferrite magnets, exchange spring magnets, magnets made from Mitsujima ka magnetic steel, and combinations thereof

### BRIEF DESCRIPTION OF THE DRAWINGS

Figure 1 depicts an elevated view of an embodiment of the main frame disclosed herein with an embodiment of the secondary frame disclosed herein, wherein the main frame is a full rim frame and the secondary frame is also a full rim frame.
Figure 2 depicts a top view of the main frame and the secondary frame of Figure 1, wherein the secondary frame engages with the main frame.
Figure 3 depicts an elevated view of an embodiment of the main frame disclosed herein with an embodiment of the secondary frame disclosed herein, wherein the main frame is a full rim frame and the secondary frame is a rimless frame.
Figure 4 depicts a top view of the main frame and the secondary frame of Figure 3, wherein the secondary frame engages with the main frame.
Figure 5 depicts an elevated view of an embodiment of the main frame disclosed herein with an embodiment of the secondary frame disclosed herein, wherein the main frame is a semi-rimless frame and the secondary frame is also a semi-rimless frame.
Figure 6 depicts a top view of the main frame and the secondary frame of Figure 5, wherein the secondary frame engages with the main frame.
Figure 7 depicts an elevated view of an embodiment of the main frame disclosed herein with an embodiment of the secondary frame disclosed herein, wherein the main frame is a semi-rimless frame and the secondary frame is a full rim frame.
Figure 8 depicts a top view of the main frame and the secondary frame of Figure 7, wherein the secondary frame engages with the main frame.
Figure 9 depicts a top view of the full-rim frame front of Figures 3 and 4 comprising a top layer having a pair of cavities and a bottom layer having a pair of cavities configured to fit a pair of magnet magnets.

### DETAILED DESCRIPTION OF THE INVENTION

### General Definitions

As used herein, the term "polymer" refers to a polymeric compound prepared by polymerizing monomers, whether of the same or a different type. The generic term "polymer" embraces the terms "homopolymer," "copolymer," "terpolymer" as well as "interpolymer."

As used herein, "eyeglass prescription" refers to a written order by an ophthalmologist or an optometrist to an optician for eyewear frames. It specifies the optical requirements to which the eyewear frames are to be made in order to correct blurred vision due to refractive errors, including but not limiting to myopia, hyperopia, astigmatism, and presbyopia.

Provided herein provided herein are eyewear assemblies comprising a main frame and a secondary frame, wherein the main frame comprises a frame front, a pair of temples and two or more first magnets separately embedded below the surface of the frame front, each of the temples pivotally attached to the frame front; wherein the secondary frame comprises two or more second magnets separately embedded below the surface of the secondary frame, wherein the secondary frame is removably secured to the main frame by magnetic engagement between the first magnets and the second magnets, and wherein the main frame and the secondary frame are free of cover parts for covering the first magnets and the second magnets respectively.

The magnets disclosed herein can be any material or object that produces a magnetic field. The magnets can be made of any ferromagnetic or ferrimagnetic materials such as Fe, Ni, and Co and many of their alloys. Some non-limiting examples of suitable magnets include neodymium magnets, bonded neo magnets, samarium-cobalt magnets, alnico magnets, ferrite magnets, exchange spring magnets, magnets made from Mitsujima ka magnetic steel, and combinations thereof.

A neodymium magnet (aka NdFeB, NIB or Neo magnet) is made from an alloy of neodymium, iron and boron to form the Nd₂Fe₁₄B tetragonal crystalline structure. The neodymium magnets are generally the strongest permanent magnets commercially available.

Bonded neo magnets are produced by processing an alloy comprises neodymium, iron and boron. The alloy is melted and then rapidly solidified by melt spinning to produce neo powders with the desired characteristics for the manufacture of bonded neo magnets.

Samarium-cobalt magnets are strong permanent magnets which generally ranked have similar strength to Neodymium Magnets, but they have higher temperature ratings and higher coercivity. However, they are brittle, and prone to cracking and chipping. They have maximum energy products (BHₘₐₓ) that range from 128 kJ/m³ to 264 kJ/m³.

Alnico magnets (aka *Alni, Alcomax*, *Hycomax*, *Columax* or *Ticonal*) refers to a family of iron alloys which in addition to iron comprises aluminum (Al), nickel (Ni) and cobalt (Co), hence *al-ni-co.* They may also include copper, and sometimes titanium. Alnico alloys are ferromagnetic with a high coercivity. The composition of alnico alloys is typically 8-12% Al, 15-26% Ni, 5-24% Co, up to 6% Cu, up to 1% Ti, and the balance is Fe.

A ferrite magnet is a ceramic comprising iron oxide (Fe₂O₃) combined chemically with one or more additional metallic elements such as barium and strontium. Ferrite magnets generally have higher coercive force and resistance to demagnetized and oxidized than other non-rate earth permanent magnets. Ferrites can be divided into hard ferrites and soft ferrites. Hard ferrites generally have high coercivity and are difficult to demagnetize. Soft ferrites generally have low coercivity.

An exchange spring magnet is a magnetic material with high coercivity and high saturation properties derived from the exchange interaction between a hard magnetic material and a soft magnetic material, respectively.

Mitsujima ka magnetic steel (aka MKM steel) is an alloy containing iron, nickel and aluminum. MKM steel is tough, durable and inexpensive to produce. Magnets made from MKM steel can maintain strong magnetism when miniaturized and can produce a stable magnetic force in spite of temperature changes or vibration.

In some embodiments, each of the magnets disclosed herein is independently a neodymium magnet, a bonded neo magnet, a samarium-cobalt magnet, an alnico magnet, a ferrite magnet, an exchange spring magnet, a magnet made from Mitsujima ka magnetic steel, or a combination thereof. In certain embodiments, the magnets disclosed herein are not neodymium magnets, bonded neo magnets, samarium-cobalt magnets, alnico magnets, ferrite magnets, exchange spring magnets, or magnets made from Mitsujima ka magnetic steel. In further embodiments, the magnets disclosed herein are not ferrite magnets.

The magnets disclosed herein can be in any form and/or size that are suitable for removably securing the secondary frame to the main frame. The magnets disclosed herein can have a regular or irregular form. In some embodiments, the magnets disclosed herein can be in the form of triangular, square, rectangular, pentagonal, hexagonal, semicircular, circular or star prism. The magnets can be rigid or flexible. In certain embodiments, the magnets disclosed herein has a volume of less than 50 mm³, less than 50 mm³, less than 40 mm³, less than 30 mm³, less than 20 mm³, less than 15 mm³, less than 10 mm³, or less than 5 mm³.

In some embodiments, the magnets disclosed herein are in the form of particles or powder. In certain embodiments, the particle size of the magnets disclosed herein is less than 500 microns, less than 400 microns, less than 300 microns, less than 200 microns, less than 100 microns, less than 75 microns, less than 50 microns, or less than 25 microns, measured according to ASTM E2651.

The main frames disclosed herein may be, *inter alia,* prescription eyewear frames, nonprescription eyewear frames, protective glass frames and the like. The prescription eyewear frames can be used to treat, *inter alia,* myopia, hyperopia, astigmatism, and presbyopia. The protective glass frames can be used to protect against hazards such as toxic gases, dusts, chemicals, lasers, X-rays, UV light, sunlight or the like. Some non-limiting examples of suitable protective glass frames include sunglass frames, safety glass frames, laser protection eyewear frames and the like. When lenses of the eyewear frames are plano lenses, the frames are referred as nonprescription eyewear frames.

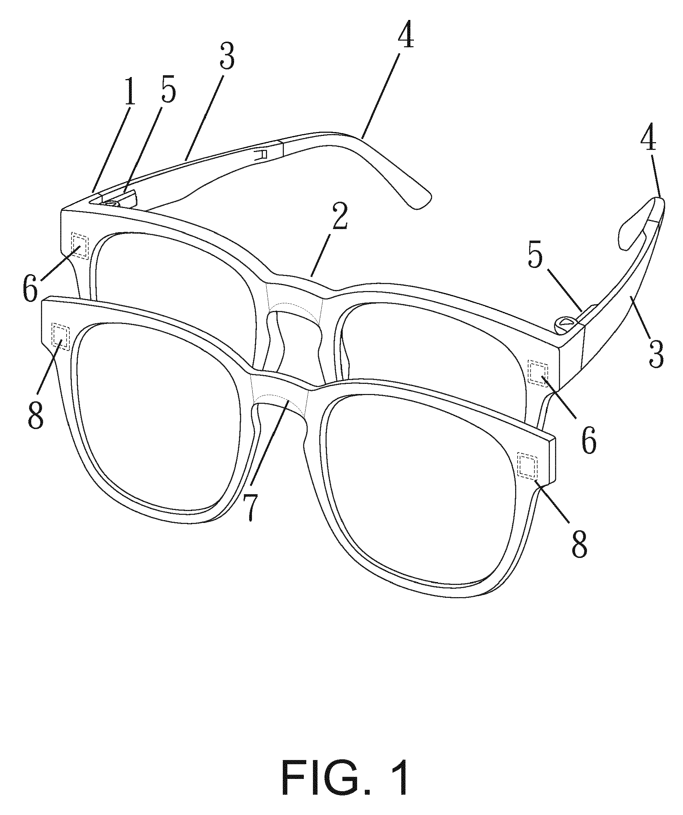

The main and secondary frames disclosed herein can be full-rim frames, semi-rimless frames, rimless frames or any other styles known to skilled artisans. Some embodiments of the eyewear assemblies disclosed herein are depicted in Figures 1-8.

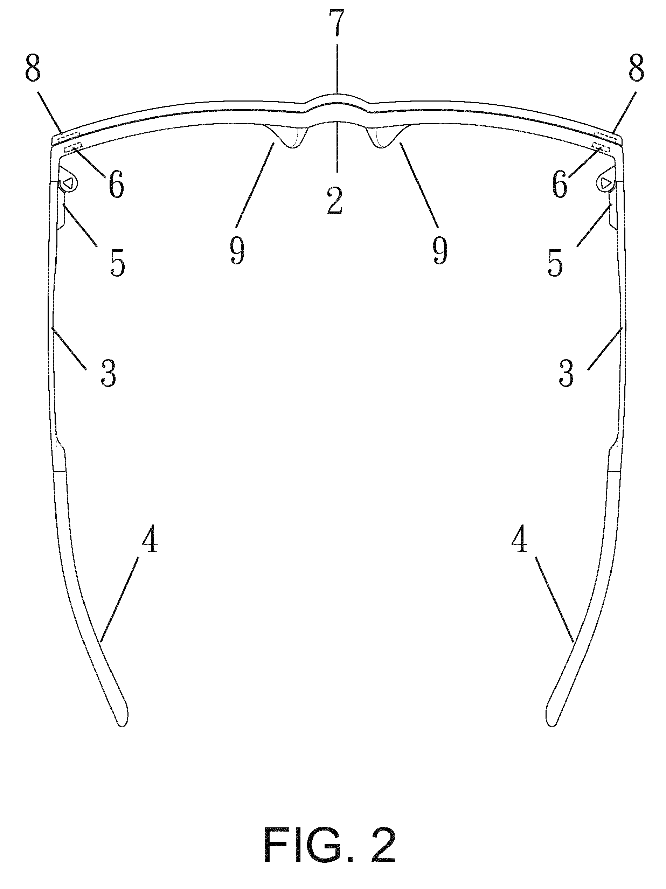

Figures 1-2 show an embodiment of the main frame with the secondary frame disclosed herein. The main frame (1) comprises a full-rim frame front (2), a pair of temples (3), a pair of hinges (5) pivotally connected to first ends of the temples (3), a pair of end tips (4) connected to second ends of the temples (3), a pair of nose pads (9) integrally attached to the full-rim frame front (2), and a first pair of magnets (6) embedded below the surface of the frame front (2) so that the first magnets (6) are invisible to human eyes. The secondary frame (7) is a full-rim frame comprising a second pair of magnets (8) embedded below the surface of the secondary frame (7) so that the second magnets (8) are invisible to human eyes. The full-rim frame front (2) has a first outer periphery and a first pair of lens holders. The magnets (6) are respectively located in the upper right and upper left portions of the first outer periphery. The secondary frame (7) has a second outer periphery and a second pair of lens holders. The magnets (8) are respectively located in the upper right and upper left portions of the second outer periphery such that the magnets (8) magnetically engage with the magnets (6) when the main frame (1) and the secondary frame (7) are in close contact with each other as shown in Figure 2.

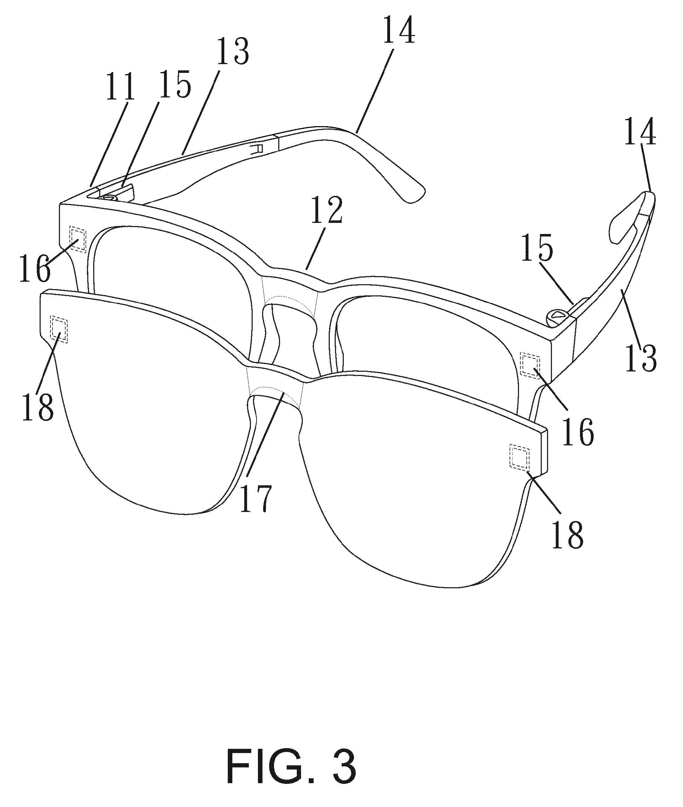

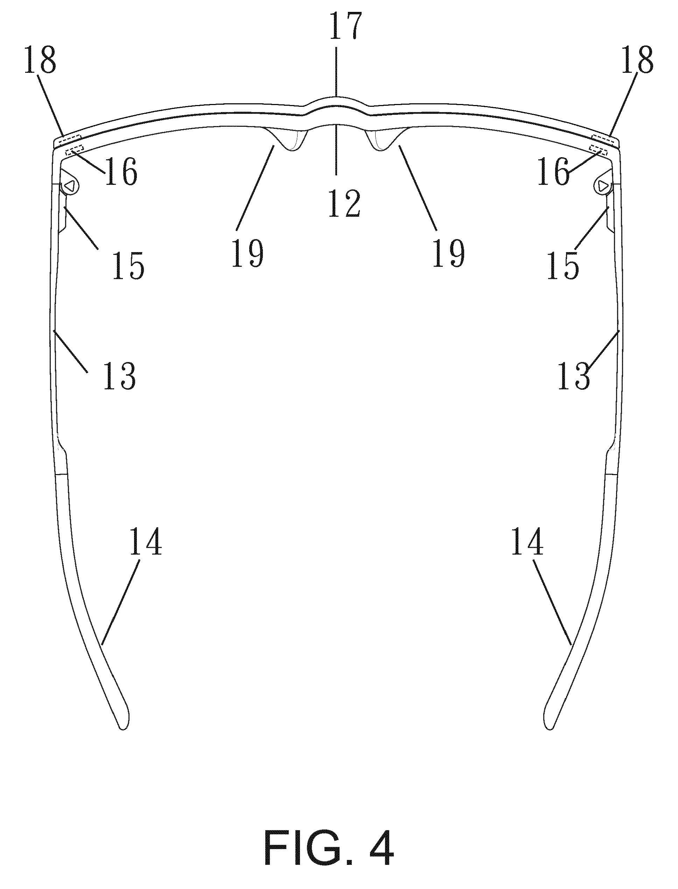

Figures 3-4 show another embodiment of the main frame with the secondary frame disclosed herein. The main frame (11) comprises a full-rim frame front (12), a pair of temples (13), a pair of hinges (15) pivotally connected to first ends of the temples (13), a pair of end tips (14) connected to second ends of the temples (13), a pair of nose pads (19) integrally attached to the full-rim frame front (12), and a first pair of magnets (16) embedded below the surface of the frame front (12) so that the first magnets (16) are invisible to human eyes. The secondary frame (17) is a rimless frame or a piece of lenses comprising a second pair of magnets (18) embedded below the surface of the secondary frame (17) so that the second magnets (18) are invisible to human eyes. The full-rim frame front (12) has an outer periphery and a pair of lens holders. The magnets (16) are respectively located in the upper right and upper left portions of the outer periphery. The magnets (18) are respectively located in the upper right and upper left portions of the secondary frame (17) such that the magnets (18) magnetically engage with the magnets (16) when the main frame (11) and the secondary frame (17) are in close contact with each other as shown in Figure 4.

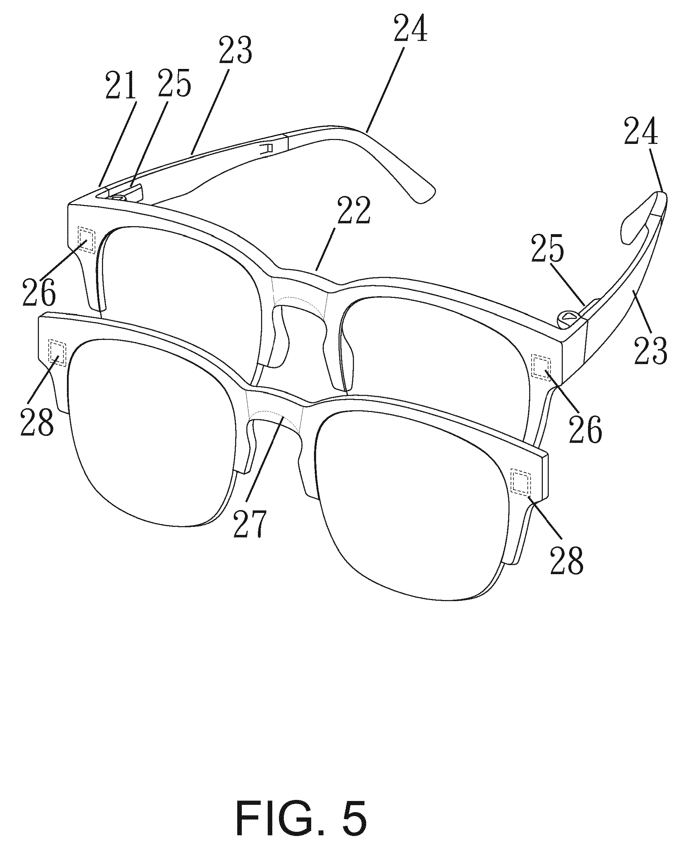

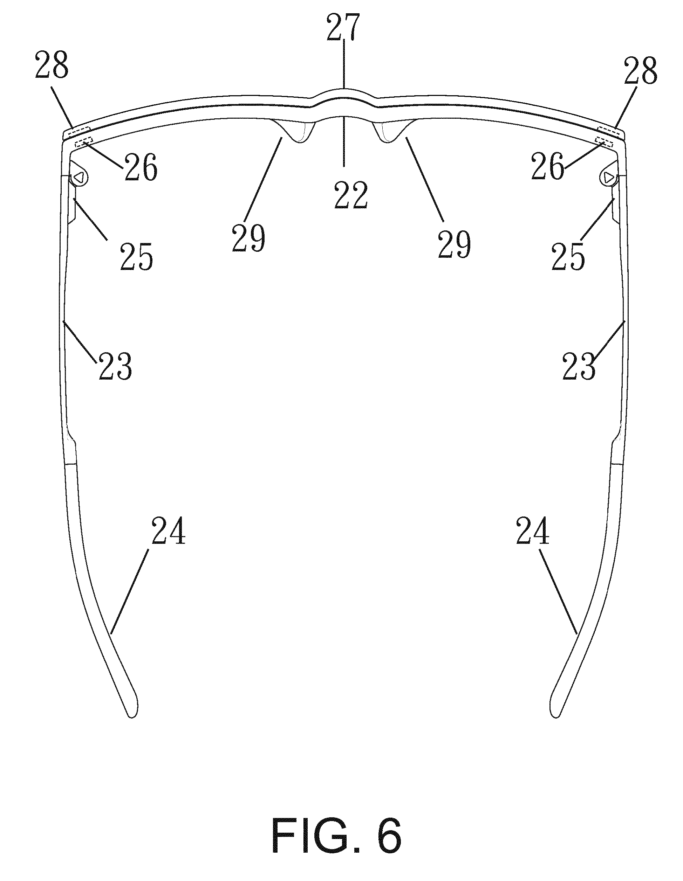

Figures 5-6 show another embodiment of the main frame with the secondary frame disclosed herein. The main frame (21) comprises a semi-rimless frame front (22), a pair of temples (23), a pair of hinges (25) pivotally connected to first ends of the temples (23), a pair of end tips (24) connected to second ends of the temples (23), a pair of nose pads (29) integrally attached to the semi-rimless frame front (22), and a first pair of magnets (26) embedded below the surface of the frame front (22) so that the first magnets (26) are invisible to human eyes. The secondary frame (27) is a semi-rimless frame comprising a second pair of magnets (28) embedded below the surface of the secondary frame (27) so that the second magnets (28) are invisible to human eyes. The full-rim frame front (22) has a first outer periphery and a first pair of lens holders. The magnets (26) are respectively located in the upper right and upper left portions of the first outer periphery. The secondary frame (27) has a second outer periphery and a second pair of lens holders. The magnets (28) are respectively located in the upper right and upper left portions of the second outer periphery such that the magnets (28) magnetically engage with the magnets (26) when the main frame (21) and the secondary frame (27) are in close contact with each other as shown in Figure 6.

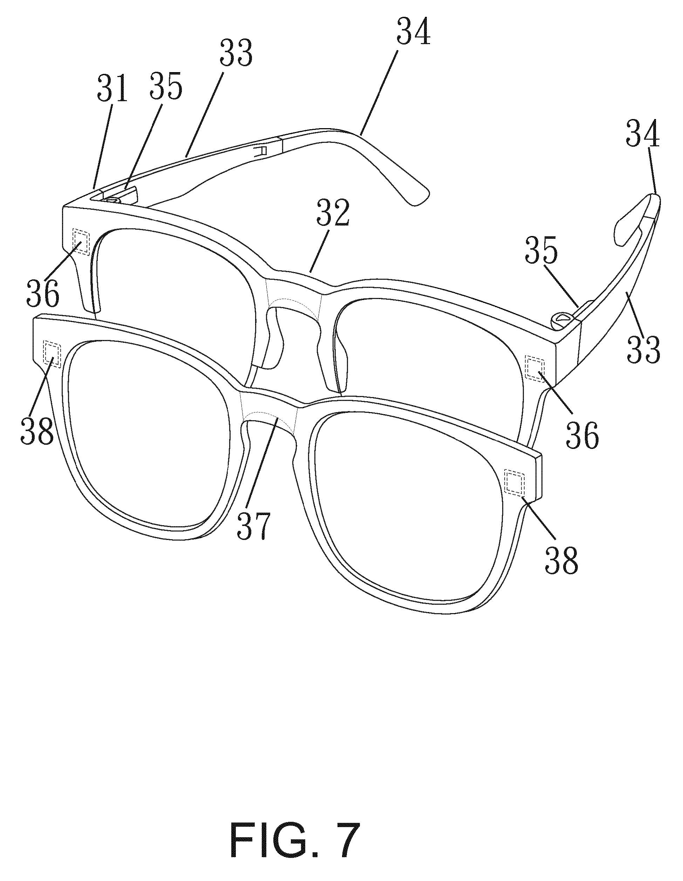

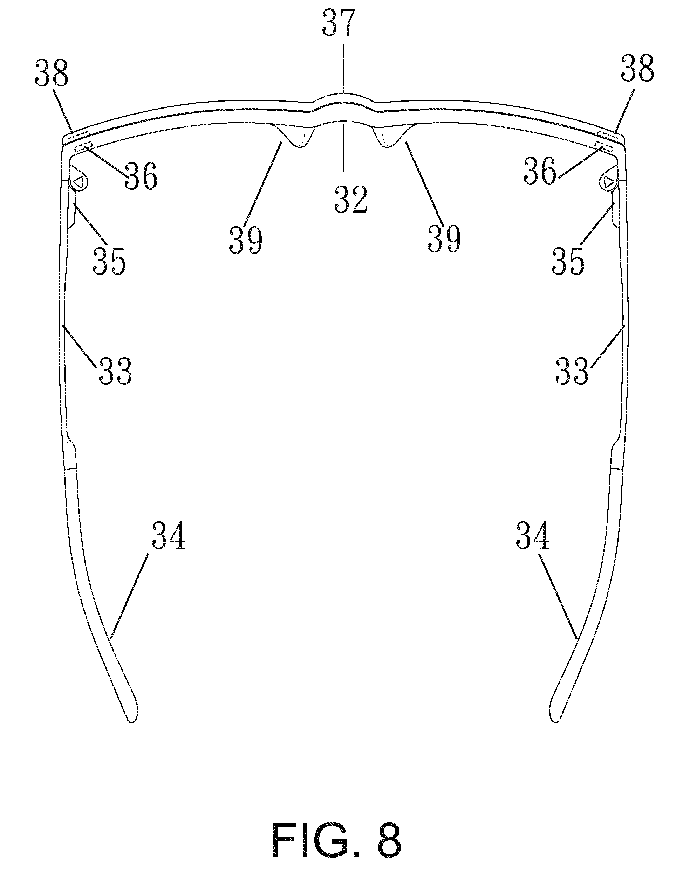

Figures 7-8 show another embodiment of the main frame with the secondary frame disclosed herein. The main frame (31) comprises a semi-rimless frame front (32), a pair of temples (33), a pair of hinges (35) pivotally connected to first ends of the temples (33), a pair of end tips (34) connected to second ends of the temples (33), a pair of nose pads (39) integrally attached to the semi-rimless frame front (32), and a first pair of magnets (36) embedded below the surface of the frame front (32) so that the first magnets (36) are invisible to human eyes. The secondary frame (37) is a full-rim frame comprising a second pair of magnets (38) embedded below the surface of the secondary frame (37) so that the second magnets (38) are invisible to human eyes. The semi-rimless frame front (32) has a first outer periphery and a first pair of lens holders. The magnets (36) are respectively located in the upper right and upper left portions of the first outer periphery. The secondary frame (37) has a second outer periphery and a second pair of lens holders. The magnets (38) are respectively located in the upper right and upper left portions of the second outer periphery such that the magnets (38) magnetically engage with the magnets (36) when the main frame (31) and the secondary frame (37) are in close contact with each other as shown in Figure 8.

The main frame and secondary frame can be made from any polymer composition suitable for eyewear frames.

In some embodiments, the eyewear assembly disclosed herein further comprises a first pair of lenses mounted on the main frame and a second pair of lenses mounted on the secondary frame. The first pair of lenses and second pair of lenses can be the same or different. In some embodiments, the first pair of lenses and second pair of lenses are different. In certain embodiments, the first pair of lenses is a pair of prescription lenses for treating, *inter alia,* myopia, hyperopia, astigmatism, and presbyopia; and the second pair of lenses is a pair of protective lenses for protecting eyes against hazards such as toxic gases, dusts, chemicals, lasers, X-rays, UV light, sunlight or the like.

The lenses disclosed herein can be made from or of any conventional lens material known to skilled artisans. For examples, the lenses can be made from or of a variety of glasses or polymers. In some embodiments, the lens material comprises or is a glass. Any glass which is suitable for making lenses can be used as a lens material herein. Some non-limiting examples of suitable glasses include silica-based glasses, germanates (glasses based on GeO₂), tellurites (glasses based on TeO₂), antimonates (glasses based on Sb₂O₃), arsenates (glasses based on As₂O₃), titanates (glasses based on TiO₂), tantalates (glasses based on Ta₂O₅) and combinations thereof. In some embodiments, the lens material is a silica-based glass. Some non-limiting examples of suitable silica-based glasses include crown glass and flint glass.

In some embodiments, the lens material comprises or is a polymer, plastic or resin. Any plastic which is suitable for making lenses can be used as a lens material herein. Some non-limiting examples of suitable plastics include polyalkyl acrylates, polyalkyl methacrylates such as polymethyl methacrylate (e.g., PLEXIGLAS™, LIMACRYL™, R-CAST™, PERSPEX™, PLAZCRYL™, ACRYLEX™, ACRYLITE™, ACRYLPLAST™, ALTUGLAS™, POLYCAST™ and LUCITE™), polycarbonates, resins *(e.g.,* CR-39™ or allyl diglycol carbonate), polyurethanes and combinations thereof.

The lenses disclosed herein can be coated with one or more coatings such as anti-scratch coating, anti-UV coating, anti-reflective coating, and combinations thereof. Further, the lenses disclosed herein can be tinted with colors. The color of the lenses can be in any color, style, fashion, and purpose.

In certain embodiments, the color of the lenses can be silver, tan, purple, green, light grey, dark grey, blue, yellow, or brown. Yellow lenses are commonly used by golfers and shooters for their contrast enhancement and depth perception properties. Brown lenses are also common among golfers, but cause color distortion. In certain embodiments, the color can be blue, purple, and green for cosmetic purposes.

In some embodiments, the lenses disclosed herein are coated with an anti-scratch coating. Any anti-scratch coating which is suitable for protecting optical lenses from scratches can be used herein. Some non-limiting examples of suitable anti-scratch coatings include UV cure hardcoats, silicone-based hardcoats and acrylic hardcoats.

In certain embodiments, the lenses disclosed herein are coated with an anti-UV coating. Any anti-UV coating or UV protective coating which is suitable for screen out UV light can be used herein. Some non-limiting examples of suitable anti-UV coating methods are tinting, polarizing, grading and mirroring.

In other embodiments, the lenses disclosed herein are coated with an anti-reflective coating. Any anti-refractive coating which is suitable for reducing reflection can be used herein. Some non-limiting examples of suitable anti-refractive coatings are low-index silica or natural nanostructured films.

In some embodiments, the lenses are prescription or corrective lenses for modifying the focal length of the eye to alleviate the effects of nearsightedness (myopia), farsightedness (hyperopia) or astigmatism.

In certain embodiments, the secondary frame is mounted with a pair of sunglass lenses. The sunglass lenses may be darkened to provide protection against bright visible and possibly ultraviolet light. Light polarization may be added to the sunglass lenses. Polarization filters can remove horizontal rays of light, which can cause glare. Popular among fishermen and hunters, polarized sunglasses allow wearers to see into water when normally glare or reflected light would be seen.

In some embodiments, the secondary frame is mounted with a pair of photosensitive lenses, called photochromic lenses, become darker in the presence of UV light.

In certain embodiments, the secondary frame is mounted with a pair of 3D lenses. 3D lenses may create the illusion of three dimensions when viewing specially prepared 2D images. The classic 3D lenses may have one red lens and one blue lens. Some 3D lenses uses polarized filters, with one lens polarized vertically and the other horizontally, with the two images required for stereo vision polarized the same way.

In certain embodiments, the main frame disclosed herein is mounted with a pair of multiple-focus lenses such as bifocal or trifocal lenses. Traditional multifocal lenses have two or three distinct viewing areas, each requiring a conscious effort of refocusing. Some modern multifocal lenses, such as progressive lenses, give a smooth transition between these different focal points.

In certain embodiments, the main frame disclosed herein is a three-piece rimless or semi-rimless frame. Three-piece rimless frame generally have no frame around the lenses, and the bridge and temples are mounted directly onto the lenses. Semi-rimless (or half-rimless) frame have a frame front that only partially encircles the lenses (generally at the top portion).

The main frame and the secondary frame disclosed herein can be prepared by injection molding or lamination. In some embodiments, an eyewear frame, such as the main frame or the secondary frame disclosed herein, is prepared by injection molding method. In further embodiments, the method of making the eyewear frame comprises the steps of:
a) providing a mold having a cavity, wherein the shape of the cavity corresponds to the shape of the eyewear frame;
b) setting two or more magnets in the mold; and
c) injecting a melt of a polymer composition into the cavity to form the eyewear frame,
wherein the two or more magnets are embedded below the surface of the eyewear frame, wherein the magnets have no pattern or image, and wherein the eyewear frame is free of cover parts for covering the two or more magnets.

In still further embodiments, the method of making the eyewear frame comprises the steps of:
a) providing a mold having a cavity, wherein the shape of the cavity corresponds to the shape of the eyewear frame;
b) injecting a melt of a polymer composition comprising magnetic particles into the cavity to form the eyewear frame; and
c) orienting the magnetic particles in a direction substantially transverse to the face of the eyewear frame before the polymer composition solidifies.

In some embodiments, the main frame and secondary frame are prepared by the above method with a polymer composition comprising magnetic particles, wherein the orientation of the magnetic particles in the main frame and the orientation of the magnetic particles in the secondary frame are in opposite directions such that the secondary frame can be removably secured to the main frame by attractive magnetic force.

In certain embodiments, an eyewear frame, such as the main frame or the secondary frame disclosed herein, is prepared by lamination method. In further embodiments, the method of making the eyewear frame comprises the steps of:
a) providing a top layer comprising a first pair of cavities, wherein the shape of the top layer corresponds to the shape of the top part of the eyewear frame;
b) providing a bottom layer comprising a second pair of cavities, wherein the shape of the bottom layer corresponds to the shape of the bottom part of the eyewear frame;
c) embedding a pair of magnets in the first pair of cavities and the second pair of cavities;
d) bonding the top layer and the bottom layer together by applying an adhesive substance, heat, pressure or a combination thereof.

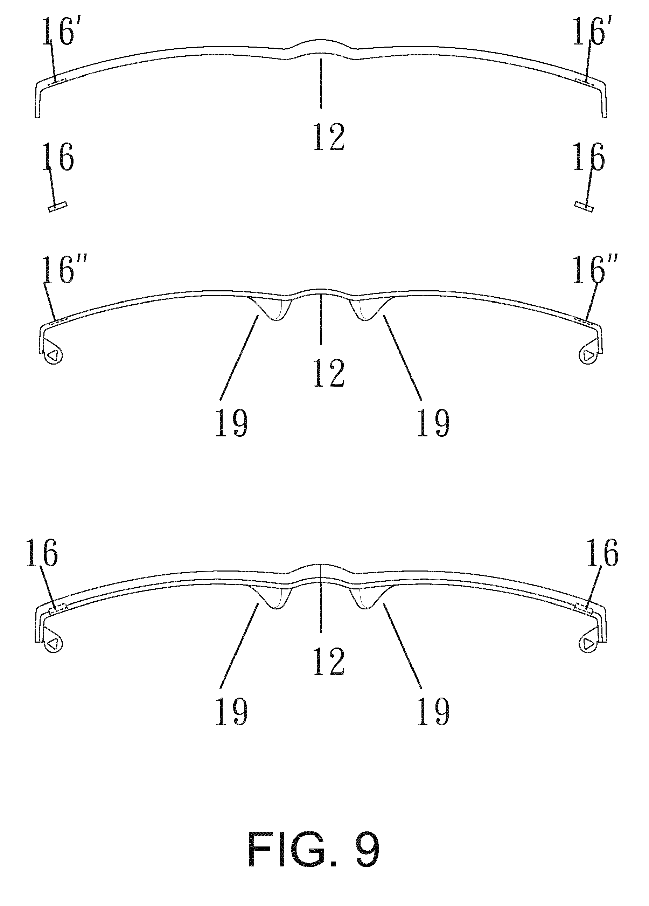

The lamination method is illustrated by Figure 9 which depicts a top view of the full-rim frame front (12) of Figures 3 and 4 comprising a top layer having a pair of cavities (16') and a bottom layer having a pair of cavities (16"), wherein the pair of cavities (16') and the pair of cavities (16") together are configured to tightly fit and embed the pair of magnet magnets (16) below the surface of the full-rim frame front (12). The top layer and the bottom layer can be bonded together by applying an adhesive substance, heat, pressure or a combination thereof The bonding step may be the step of thermoform or lamination. The bonding step may comprise the step of applying a temperature in the range of 0 °C to 300 °C and a pressure in the range of 0 atmosphere to 100 atmospheres, or 1 atmosphere to 20 atmospheres.

The top layer and the bottom layer can be made from sheets or laminates comprising polymer compositions disclosed herein. In some embodiments, top layer and the bottom layer can be transparent, semi-transparent, non-transparent sheets comprising polymer compositions disclosed herein. In certain embodiments, the sheets can be made of cellulose acetate, cellulose acetate propionate, polycarbonate, TPE or nylon

### Polymer Compositions

The polymer composition can comprise any polymer suitable for making eyewear frames such as the main frame and the secondary frame disclosed herein. Some non-limiting examples of suitable polymers include cellulose esters, polycarbonates, polyurethanes, thermoplastic elastomers (TPE), polyamides or nylons, polyesters, copolyesters and combinations thereof. In some embodiments, the polymer is or comprises cellulose acetate, cellulose acetate propionate, a polycarbonate, a polyamide, a polyester, a copolyester or a combination thereof.

In some embodiments, the polymer or polymer composition comprises at least one cellulose ester. Any cellulose ester suitable for making eyewear frames can be used herein. Some non-limiting examples of suitable cellulose ester include cellulose acetate and cellulose acetate propionate.

In certain embodiments, the polymer composition comprises at least one thermoplastic elastomer (TPE). Any TPE that can be repeatedly stretched without permanently deformation or distortion can be used herein. Some non-limiting examples of suitable thermoplastic elastomer include styrenic block copolymers, thermoplastic polyolefin blends (TPOs), elastomeric alloys, thermoplastic polyurethanes (TPUs), thermoplastic copolyesters, and thermoplastic polyamides.

In some embodiments, the polymer composition comprises at least one polyamide or nylon. Any polyamide or nylon suitable for making eyewear frames can be used herein. Some non-limiting examples of suitable polyamide or nylon include polyamide 6, polyamide 8, polyamide 10, polyamide 11 and polyamide 12.

In certain embodiments, the polymer composition comprises at least one polyester. Any polyester suitable for making eyewear frames can be used herein. Some non-limiting examples of suitable polyester include polyethylene terephthalate (PET), polyethylene naphthalate (PEN) and poly(cyclohexanedimethylene terephthalate) (PCT).

In some embodiments, the polymer composition comprises at least one copolyester. Any copolyester suitable for making eyewear frames can be used herein. Some non-limiting examples of suitable copolyester include PCTA or a glycol modified copolyester such as copolyesters derived from ethylene glycol, 1,4-cyclohexane dimethanol and dimethyl terephthalate or terephthalic acid *(e.g.,* PCTG, PETG or PET-CHDM).

In certain embodiments, the polymer composition comprises a PCTG polymer which can be derived from ethylene glycol, 1,4-cyclohexane dimethanol and dimethyl terephthalate or terephthalic acid (TPA). The generic structure of PCTG can be represented by formula (I) as shown below. 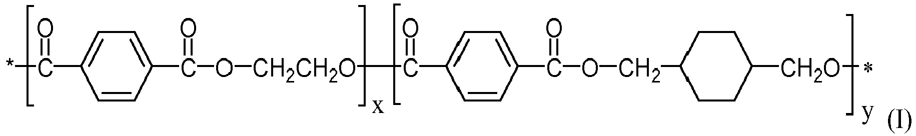 wherein the asterisks (*) are end groups *(e.g.,* H, OH, SH, TPA, ester or amide end group); y is from 0.5 to 0.99; and x is from 0.5 to 0.01. PCTG is distinguished from PETG or PCT by the values of x and y. For example, y is from 0.05 to 0.5 and x is from 0.95 to 0.5 for PETG; y is 1.0 and x is 0 for PCT; and y is from 0.01 to 0.05 and x is from 0.99 to 0.95 for PET-CHDM.

Any PCTG that has the above generic formula (I) can be used herein. In some embodiments, y of the PCTG polymers used herein is from 0.5 to 0.99 and x is from 0.5 to 0.01. In other embodiments, y of the PCTG polymers used herein is from 0.55 to 0.95 and x is from 0.45 to 0.05. In further embodiments, y of the PCTG polymers used herein is from 0.6 to 0.9 and x is from 0.4 to 0.1. In still further embodiments, y of the PCTG polymers used herein is from 0.65 to 0.85 and x is from 0.35 to 0.15. In still further embodiments, the sum of x and y is 1.

The end groups of formula (I) can be varied according to the requirements of the eyewear frames. In some embodiments, the end groups are H, OH, TPA or a mixture thereof. In other embodiments, the OH end group can be modified by reacting with an carboxylic acid to form an ester end group. In further embodiments, the TPA end group can be modified by reacting with an alcohol or an amine to form an ester end group or an amide end group. A skilled artisan can recognize that the above-mentioned end group can be modified by any reaction or chemistry known in the literature.

The polymers disclosed herein can have a melt index, I₂, from about 0.01 to about 2000 g/10 minutes, from about 0.01 to about 1000 g/10 minutes, from about 0.01 to about 500 g/10 minutes, or from about 0.01 to about 100 g/10 minutes. The melt index can be measured at a condition of 190°C/2.16 kg according to ASTM D-1238, which is incorporated herein by reference.

The polymers disclosed herein can have a molecular weight, M_{w}, from about 1,000 g/mole to about 5,000,000 g/mole, from about 1000 g/mole to about 1,000,000, from about 10,000 g/mole to about 500,000 g/mole, or from about 10,000 g/mole to about 300,000 g/mole. The density of the polymers disclosed herein can be from about 1.0 to about 1.4 g/cm³ or from about 1.1 g/cm³ to about 1.3 g/cm³.

The amount of the polymer in the polymer composition can vary from about 60 wt.% to about 100 wt.%, from about 70 wt.% to about 99.9 wt.%, from about 80 wt.% to about 99.5 wt.%, from about 90 wt.% to about 99 wt.%, or from about 95 wt.% to about 99 wt.%, based on the total amount of the polymer composition.

In some embodiments, the polymer compositions for making the eyewear frames have thermo-memory property. Thermo-memory property refers to the original shape of the eyewear frame can be adjusted to another shape at a certain temperature (e.g., a temperature higher than the glass transition temperature (*i.e.,* Tg) of the polymer composition), and the adjusted eyewear frame maintains the adjusted shape after cooling down to room temperature. When the frame is heated up again, it can return to the original shape. Having this desirable property, the eyewear frame can be easily adjusted during the fitting process to suit the different needs of various wearers. In certain embodiments, the Tg of the polymer composition is from about 40 °C to about 140 °C, from about 45 °C to about 120 °C, from about 50 °C to about 110 °C, from about 55 °C to about 100 °C, from about 60 °C to about 90 °C, from about 65 °C to about 85 °C. In further embodiments, the Tg of the polymer composition is from about 70 °C to about 80 °C.

In certain embodiments, the polymer compositions for making the eyewear frames are dimensionally stable. The dimension of the eyewear frames can stably be kept even though the frame has been produced or used for a long period of time.

In other embodiments, the polymer compositions for making the eyewear frames have good thermal stability and toughness. The shape and dimensional stability of the eyewear frames can be kept even though the eyewear frames are subjected to a temperature higher than about 60 °C or higher than about 70 °C for more than about 2 days or more than about 7 days.

### Additives

Optionally, the polymer compositions disclosed herein can comprise at least one additive for the purposes of improving and/or controlling the processibility, appearance, physical, chemical, and/or mechanical properties of the polymer compositions. In some embodiments, the polymer compositions do not comprise an additive. Any plastics additive known to a person of ordinary skill in the art may be used in the polymer compositions disclosed herein. Non-limiting examples of suitable additives include colorants or pigments, UV stabilizers, plasticizers, antioxidants, fillers, lubricants, antifogging agents, flow aids, coupling agents, cross-linking agents, nucleating agents, surfactants, slip agents, anti-blocking agents, solvents, flame retardants, antistatic agents, and combinations thereof. The total amount of the additives can range from about greater than 0 to about 80 wt.%, from about 0.001 wt.% to about 70 wt.%, from about 0.01 wt.% to about 60 wt.%, from about 0.1 wt.% to about 50 wt.%, from about 1 wt.% to about 40 wt.%, or from about 10 wt.% to about 50 wt.% of the total weight of the polymer composition. Some polymer additives have been described in Zweifel Hans et al., "Plastics Additives Handbook," Hanser Gardner Publications, Cincinnati, Ohio, 5th edition (2001), which is incorporated herein by reference in its entirety.

In further embodiments, the polymer compositions disclosed herein optionally comprise a colorant or pigment that can change the look of the polymer compositions to human eyes. Any colorant or pigment known to a person of ordinary skill in the art may be added to the polymer compositions disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolo-pyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or pigment in the polymer composition can be from about greater than 0 to about 10 wt.%, from about 0.1 wt.% to about 5 wt.%, or from about 0.25 wt.% to about 2 wt.% of the total weight of the polymer composition. Some colorants have been described in Zweifel Hans et al., "Plastics Additives Handbook," Hanser Gardner Publications, Cincinnati, Ohio, 5th edition, Chapter 15, pages 813-882 (2001), which is incorporated herein by reference.

Optionally, the polymer compositions disclosed herein can comprise a filler which can be used to adjust, *inter alia,* volume, weight, costs, and/or technical performance. Any filler known to a person of ordinary skill in the art may be added to the polymer compositions disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the polymer composition can be from about greater than 0 to about 80 wt.%, from about 0.1 to about 60 wt.%, from about 0.5 wt.% to about 40 wt.%, from about 1 wt.% to about 30 wt.%, or from about 10 wt.% to about 40 wt.% of the total weight of the polymer composition. Some fillers have been disclosed in U.S. Patent No. 6,103,803 and Zweifel Hans et al., "Plastics Additives Handbook," Hanser Gardner Publications, Cincinnati, Ohio, 5th edition, Chapter 17, pages 901-948 (2001), both of which are incorporated herein by reference.

In other embodiments, the polymer compositions disclosed herein optionally comprise an UV stabilizer that may prevent or reduce the degradation of the polymer compositions by UV radiations. Any UV stabilizer known to a person of ordinary skill in the art may be added to the polymer compositions disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the polymer composition can be from about greater than 0 to about 5 wt.%, from about 0.01 wt.% to about 3 wt.%, from about 0.1 wt.% to about 2 wt.%, or from about 0.1 wt.% to about 1 wt.% of the total weight of the polymer composition. Some UV stabilizers have been described in Zweifel Hans et al., "Plastics Additives Handbook," Hanser Gardner Publications, Cincinnati, Ohio, 5th edition, Chapter 2, pages 141-426 (2001), which is incorporated herein by reference.

Optionally, the polymer compositions disclosed herein can comprise a plasticizer. In general, a plasticizer is a chemical that can increase the flexibility and lower the glass transition temperature of polymers. Any plasticizer disclosed herein can used for the polymer compositions. Non-limiting examples of plasticizers include mineral oils, abietates, adipates, alkyl sulfonates, azelates, benzoates, chlorinated paraffins, citrates, epoxides, glycol ethers and their esters, glutarates, hydrocarbon oils, isobutyrates, oleates, pentaerythritol derivatives, phosphates, phthalates, esters, polybutenes, ricinoleates, sebacates, sulfonamides, tri- and pyromellitates, biphenyl derivatives, stearates, difuran diesters, fluorine-containing plasticizers, hydroxybenzoic acid esters, isocyanate adducts, multi-ring aromatic compounds, natural product derivatives, nitriles, siloxane-based lamination agents, tar-based products, thioeters and combinations thereof. Where used, the amount of the plasticizer in the polymer composition can be from greater than 0 to about 15 wt.%, from about 0.5 wt.% to about 10 wt.%, or from about 1 wt.% to about 5 wt.% of the total weight of the polymer composition. Some plasticizers have been described in George Wypych, "Handbook of Plasticizers," ChemTec Publishing, Toronto-Scarborough, Ontario (2004), which is incorporated herein by reference.

In some embodiments, the polymer compositions disclosed herein optionally comprise an antioxidant that can prevent the oxidation of polymer components and organic additives in the polymer compositions. Any antioxidant known to a person of ordinary skill in the art may be added to the polymer compositions disclosed herein. Non-limiting examples of suitable antioxidants include aromatic or hindered amines such as alkyl diphenylamines, phenyl-α- naphthylamine, alkyl or aralkyl substituted phenyl-α-naphthylamine, alkylated p-phenylene diamines, tetramethyl-diaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (e.g., IRGANOX™ 1010, from Ciba Geigy, New York); acryloyl modified phenols; octadecyl-3,5-di-t-butyl-4-hydroxycinnamate (e.g., IRGANOX™ 1076, commercially available from Ciba Geigy); phosphites and phosphonites; hydroxylamines; benzofuranone derivatives; and combinations thereof. Where used, the amount of the antioxidant in the polymer composition can be from about greater than 0 to about 5 wt.%, from about 0.0001 wt.% to about 2.5 wt.%, from about 0.001 wt.% to about 1 wt.%, or from about 0.001 wt.% to about 0.5 wt.% of the total weight of the polymer composition. Some antioxidants have been described in Zweifel Hans et al., "Plastics Additives Handbook," Hanser Gardner Publications, Cincinnati, Ohio, 5th edition, Chapter 1, pages 1-140 (2001), which is incorporated herein by reference.

Optionally, the polymer compositions disclosed herein can comprise a lubricant. In general, the lubricant can be used, *inter alia,* to modify the rheology of the molten polymer compositions, to improve the surface finish of molded articles, and/or to facilitate the dispersion of fillers or pigments. Any lubricant known to a person of ordinary skill in the art may be added to the polymer compositions disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the polymer composition can be from about greater than 0 to about 5 wt.%, from about 0.1 wt.% to about 4 wt.%, or from about 0.1 wt.% to about 3 wt.% of the total weight of the polymer composition. Some suitable lubricants have been disclosed in Zweifel Hans et al., "Plastics Additives Handbook," Hanser Gardner Publications, Cincinnati, Ohio, 5th edition, Chapter 5, pages 511-552 (2001), both of which are incorporated herein by reference.

Optionally, the polymer compositions disclosed herein can comprise an antistatic agent. Generally, the antistatic agent can increase the conductivity of the polymer compositions and to prevent static charge accumulation. Any antistatic agent known to a person of ordinary skill in the art may be added to the polymer compositions disclosed herein. Non-limiting examples of suitable antistatic agents include conductive fillers (e.g., carbon black, metal particles and other conductive particles), fatty acid esters (e.g., glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the polymer composition can be from about greater than 0 to about 5 wt.%, from about 0.01 wt.% to about 3 wt.%, or from about 0.1 wt.% to about 2 wt.% of the total weight of the polymer composition. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001), both of which are incorporated herein by reference.

In some embodiments, the polymer compositions disclosed herein comprise a slip agent. In other embodiments, the polymer compositions disclosed herein do not comprise a slip agent. Slip is the sliding of film surfaces over each other or over some other substrates. The slip performance of films can be measured by ASTM D 1894, *Static and Kinetic Coefficients of Friction of Plastic Film and Sheeting,* which is incorporated herein by reference. In general, the slip agent can convey slip properties by modifying the surface properties of films; and reducing the friction between layers of the films and between the films and other surfaces with which they come into contact.

Any slip agent known to a person of ordinary skill in the art may be added to the polymer compositions disclosed herein. Non-limiting examples of the slip agents include primary amides having about 12 to about 40 carbon atoms (e.g., erucamide, oleamide, stearamide and behenamide); secondary amides having about 18 to about 80 carbon atoms *(e.g.,* stearyl erucamide, behenyl erucamide, methyl erucamide and ethyl erucamide); secondary-bis-amides having about 18 to about 80 carbon atoms (e.g., ethylene-bis-stearamide and ethylene-bis-oleamide); and combinations thereof.

In some embodiments, the slip agent is a primary amide with a saturated aliphatic group having between 18 and about 40 carbon atoms (e.g., stearamide and behenamide). In other embodiments, the slip agent is a primary amide with an unsaturated aliphatic group containing at least one carbon-carbon double bond and between 18 and about 40 carbon atoms (e.g., erucamide and oleamide). In further embodiments, the slip agent is a primary amide having at least 20 carbon atoms. In further embodiments, the slip agent is erucamide, oleamide, stearamide, behenamide, ethylene-bis-stearamide, ethylene-bis-oleamide, stearyl erucamide, behenyl erucamide or a combination thereof. In a particular embodiment, the slip agent is erucamide. In further embodiments, the slip agent is commercially available having a trade name such as ATMER™ SA from Uniqema, Everberg, Belgium; ARMOSLIP^{®} from Akzo Nobel Polymer Chemicals, Chicago, IL; KEMAMIDE^{®} from Witco, Greenwich, CT; and CRODAMIDE^{®} from Croda, Edison, NJ. Where used, the amount of the slip agent in the polymer composition can be from about greater than 0 to about 3 wt.%, from about 0.0001 wt.% to about 2 wt.%, from about 0.001 wt.% to about 1 wt.%, from about 0.001 wt.% to about 0.5 wt.% or from about 0.05 wt.% to about 0.25 wt.% of the total weight of the polymer composition. Some slip agents have been described in Zweifel Hans et al., "Plastics Additives Handbook," Hanser Gardner Publications, Cincinnati, Ohio, 5th edition, Chapter 8, pages 601-608 (2001), which is incorporated herein by reference.

Optionally, the polymer compositions disclosed herein can comprise an anti-blocking agent. In some embodiments, the polymer compositions disclosed herein do not comprise an anti-blocking agent. The anti-blocking agent can be used to prevent the undesirable adhesion between touching layers of articles made from the polymer compositions, particularly under moderate pressure and heat during storage, manufacture or use. Any anti-blocking agent known to a person of ordinary skill in the art may be added to the polymer compositions disclosed herein. Non-limiting examples of anti-blocking agents include minerals *(e.g.,* clays, chalk, and calcium carbonate), synthetic silica gel *(e.g.,* SYLOBLOC^{®} from Grace Davison, Columbia, MD), natural silica (e.g., SUPER FLOSS^{®} from Celite Corporation, Santa Barbara, CA), talc *(e.g.,* OPTIBLOC^{®} from Luzenac, Centennial, CO), zeolites (e.g., SIPERNAT^{®} from Degussa, Parsippany, NJ), aluminosilicates (e.g., SILTON^{®} from Mizusawa Industrial Chemicals, Tokyo, Japan), limestone *(e.g.,* CARBOREX^{®} from Omya, Atlanta, GA), spherical polymeric particles *(e.g.,* EPOSTAR^{®}, poly(methyl methacrylate) particles from Nippon Shokubai, Tokyo, Japan and TOSPEARL^{®}, silicone particles from GE Silicones, Wilton, CT), waxes, amides (e.g. erucamide, oleamide, stearamide, behenamide, ethylene-bis-stearamide, ethylene-bis-oleamide, stearyl erucamide and other slip agents), molecular sieves, and combinations thereof. The mineral particles can lower blocking by creating a physical gap between articles, while the organic anti-blocking agents can migrate to the surface to limit surface adhesion. Where used, the amount of the anti-blocking agent in the polymer composition can be from about greater than 0 to about 3 wt.%, from about 0.0001 wt.% to about 2 wt.%, from about 0.001 wt.% to about 1 wt.%, or from about 0.001 wt.% to about 0.5 wt.% of the total weight of the polymer composition. Some anti-blocking agents have been described in Zweifel Hans et al., "Plastics Additives Handbook," Hanser Gardner Publications, Cincinnati, Ohio, 5th edition, Chapter 7, pages 585-600 (2001), which is incorporated herein by reference.

In further embodiments, the polymer compositions disclosed herein optionally comprise a cross-linking agent that can be used to increase the cross-linking density of the polymer compositions. Any cross-linking agent known to a person of ordinary skill in the art may be added to the polymer compositions disclosed herein. Non-limiting examples of suitable cross-linking agents include organic peroxides (e.g., alkyl peroxides, aryl peroxides, peroxyesters, peroxycarbonates, diacylperoxides, peroxyketals, and cyclic peroxides) and silanes (e.g., vinyltrimethoxysilane, vinyltriethoxysilane, vinyltris(2-methoxyethoxy)silane, vinyltriacetoxysilane, vinylmethyldimethoxysilane, and 3-methacryloyloxypropyltrimethoxysilane). Where used, the amount of the cross-linking agent in the polymer composition can be from about greater than 0 to about 20 wt.%, from about 0.1 wt.% to about 15 wt.%, or from about 1 wt.% to about 10 wt.% of the total weight of the polymer composition. Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001), both of which are incorporated herein by reference.

The cross-linking of the polymer compositions can also be initiated by any radiation means known in the art, including, but not limited to, electron-beam irradiation, beta irradiation, gamma irradiation, corona irradiation, and UV radiation with or without cross-linking catalyst. U.S. Patent Application No. 10/086,057 (published as US2002/0132923 A1) and U.S. Patent No. 6,803,014 disclose electron-beam irradiation methods that can be used in embodiments of the invention.

Crosslinking can be promoted with a crosslinking catalyst, and any catalyst that will provide this function can be used. Suitable catalysts generally include organic bases, carboxylic acids, and organometallic compounds including organic titanates and complexes or carboxylates of lead, cobalt, iron, nickel, zinc and tin. Dibutyltindilaurate, dioctyltinmaleate, dibutyltindiacetate, dibutyltindioctoate, stannous acetate, stannous octoate, lead naphthenate, zinc caprylate, cobalt naphthenate; and the like. Tin carboxylate, especially dibutyltindilaurate and dioctyltinmaleate, are particularly effective for this invention. The catalyst (or mixture of catalysts) is present in a catalytic amount, typically between about 0.015 and about 0.035 phr.

### Preparation of the Polymer Compositions

The ingredients of the polymer compositions can be mixed or blended using methods known to a person of ordinary skill in the art, preferably methods that can provide a substantially homogeneous distribution of the polymer and additives in the polymer composition. Non-limiting examples of suitable blending methods include melt blending, solvent blending, extruding, and the like.

In some embodiments, the magnets are in the form of particles or powder and the magnetic particles are added to the polymer compositions with other ingredients to form a magnetic polymer composition. The magnet particles in the magnetic polymer composition can be controlled to a desired orientation by a strong magnetic field surround the mold during injection molding. The desired magnetic orientation is maintained when the polymer composition melt solidifies after the injection step.

In some embodiments, the ingredients of the polymer compositions are melt blended by a method as described by Guerin et al. in U.S. Patent No. 4,152,189. First, all solvents, if there are any, are removed from the ingredients by heating to an appropriate elevated temperature of about 100 °C to about 200 °C or about 150 °C to about 175 °C at a pressure of about 5 torr (667 Pa) to about 10 torr (1333 Pa). Next, the ingredients are weighed into a vessel in the desired proportions and the polymer composition is formed by heating the contents of the vessel to a molten state while stirring.

In other embodiments, the ingredients of the polymer compositions are processed using solvent blending. First, the ingredients of the desired polymer composition are dissolved in a suitable solvent and the mixture is then mixed or blended. Next, the solvent is removed to provide the polymer composition.

In further embodiments, physical blending devices that provide dispersive mixing, distributive mixing, or a combination of dispersive and distributive mixing can be useful in preparing homogenous blends. Both batch and continuous methods of physical blending can be used. Non-limiting examples of batch methods include those methods using BRABENDER® mixing equipments (e.g., BRABENDER PREP CENTER®, available from C. W. Brabender Instruments, Inc., South Hackensack, N.J.) or BANBURY® internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some embodiments, the additives can be added into an extruder through a feed hopper or feed throat during the extrusion of the polymer composition. The mixing or blending of polymers by extrusion has been described in C. Rauwendaal, "Polymer Extrusion", Hanser Publishers, New York, NY, pages 322-334 (1986), which is incorporated herein by reference.

When one or more additives are required in the polymer compositions, the desired amounts of the additives can be added in one charge or multiple charges to the polymer composition. Furthermore, the addition can take place in any order. In some embodiments, the additives are first added and mixed or blended with the polymer. Polymer compositions can also be performed at the fabrication equipment as dry blends (no pre-compounding required).

Alternatively, master batches containing high concentrations of the additives can be used. In general, master batches can be prepared by blending either the polymer with high concentrations of additives. The master batches can have additive concentrations from about 1 wt.% to about 50 wt.%, from about 1 wt.% to about 40 wt.%, from about 1 wt.% to about 30 wt.%, or from about 1 wt.% to about 20 wt.% of the total weight of the polymer composition. The master batches can then be added to the polymer compositions in an amount determined to provide the desired additive concentrations in the end products. In some embodiments, the master batch contains a UV stabilizer, a colorant or pigment, a filler, a plasticizer, an antioxidant, a slip agent, an anti-blocking agent, a lubricant, an antifogging agent, a flow aid, a coupling agent, a cross-linking agent, a nucleating agent, a surfactant, a solvent, a flame retardant, an antistatic agent, or a combination thereof. In other embodiment, the master batch contains a UV stabilizer, a colorant or pigment, a filler or a combination thereof. In other embodiment, the master batch contains at least one colorant.

### Making Eyewear Frames with Polymer Compositions by Injection Molding

The polymers or polymer compositions disclosed herein can be used to prepare eyewear frames with magnets by injection molding. The magnets may be set in a mold of an injection molding machine which then injects a polymer melt into the mold so as to form an eyewear frame with the magnets embedded below the surface of the eyewear frame.

In some embodiments, the method disclosed herein can be used to make an eyewear frame with a design pattern in addition to the magnets. The design pattern may be printed by transfer printing on the surface of a laminate. The laminate with the design pattern is then shaped corresponding to the patterned layer or patterned core layer for a frame front and/or a pair of temples of an eyeglass frame. The patterned layer may be set together with the magnets in a mold of an injection molding machine which then injects a polymer melt into the mold so as to form top and bottom layers above and below the patterned layer.

In some embodiments, the polymer composition is used to make the eyewear frames by the injection molding process according to the method disclosed herein. In general, injection molding is a process by which one or more polymers or polymer compositions are first fed into a hopper on an injection molding machine. Then the mixture is conveyed, melted and mixed thoroughly by one or more rotating screws inside the injection molding machine. The melt of the polymers or polymer compositions is injected under high pressure into a mold, the shape of which is the inverse of the desired shape, to form parts of the desired shape and size of the molded article such as an eyeglass frame. The mold can be made from metal, such as steel, aluminum and beryllium-copper alloy. After the melt cools within the heat-balanced mold, the molded article is removed from the mold and a new injection molding cycle begins. The injection molding of polymers has been described in Beaumont et al., "Successful Injection Molding: Process, Design, and Simulation," Hanser Gardner Publications, Cincinnati, Ohio (2002), which is incorporated herein by reference in its entirety.

In some embodiment, the injection molding process conditions are selected such that the conditions do not cause deformation or distortion of the patterned layer or the laminate or the design pattern. In certain embodiment, the injection molding process conditions are selected such that the conditions cause deformation or distortion of the patterned layer or the laminate or the design pattern. In certain embodiments, the mold pressure is from about 30 MPa to about 110 MPa and the mold temperature is from about 45 °C to about 80 °C.

In certain embodiments, the mold pressure is from about 10 MPa to about 200 MPa, from about 15 MPa to about 175 MPa, from about 20 MPa to about 150 MPa, from about 25 MPa to about 125 MPa, from about 30 MPa to about 110 MPa, or from about 35 MPa to about 100 MPa.

In some embodiments, the mold temperature is from about 25 °C to about 150 °C, from about 30 °C to about 125 °C, from about 35 °C to about 100 °C, from about 40 °C to about 90 °C, from about 45 °C to about 80 °C or from about 50 °C to about 75 °C.

Different types of injection molding processes known to a skilled artisan can be used herein. Some non-limiting examples of different types of injection molding processes include structural foam molding, injection-compression molding, inmolding, back molding, two-shot molding, reaction injection molding, sandwich molding and the gas-injection molding, soluble core molding, insert molding, liquid injection molding, gas counterflow molding, and melt counterflow molding.

In some embodiments, the injection molding process is structural foam molding, which is also known as integral skin foaming, foam molding or foamed gas-counter pressure. It may be used to produce plastic structures with nearly uniform-density foam cores and integral near-solid skins.

In certain embodiments, the injection molding process is injection-compression molding which is also known as injection stamping or coining. It may be used to produce thickwalled articles, free of warping or sink-marks. It is presently even employed for producing moldings with long flow-paths.

In some embodiments, the injection molding process is injection-compression molding which can be divided into two phases: injection phase and compression phase. During the injection phase, a melt is injected into the mold as a short shot, which is open for just the length of the necessary compression stroke. As the cavity's volume is larger than that of the subsequently produced molding, the injected melt accumulates as bulk. During the compression phase, this bulk is spread and pressed into shape inside the cavity by the closing of the moving mold half. The sprue-bush is shut off when the start of the compression phase which may prevent the melt escaping from the mold cavity.

In certain embodiments, the injection molding process is inmolding which is also known as inmold or two (or more) component molding. This process comprises some overmolding techniques such as back molding and two shot molding.

In some embodiments, the injection molding process is back molding which is also known as low pressure injection molding. It is a method for producing decor moldings by the injection molding process. The moldings are composed of a thermoplastic substrate and decor material. The decor material may consist of film, textiles and so on. The decor material is draped inside the mold and back-injected with the material forming the substrate.

In certain embodiments, the injection molding process is two-shot molding which is also known as overmolding, two-color shuttle molding or two-color rotary molding. Two materials are molded, such that the molded shot is overmolded by the second molded shot. The first molded part is positioned so that the second material can be molded around, over or through the first one. The two materials can be the same or different and they can be molded to bond together or not bond together.

In some embodiments, the injection molding process is reaction injection molding which is also known as liquid injection molding. Reaction injection molding is a processing technique for the formation of polymer parts by direct polymerization in the mold through a mixing activated reaction. Two reactive monomeric liquids are mixed together by high-pressure impingement and injected into a closed mold at low pressure. In the mold, polymerization occurs, the polymer part solidifies and is then ejected. Reaction injection molding can be used for molding polyurethanes, epoxies, nylons and other liquid chemical systems.

In certain embodiments, the injection molding process is sandwich molding or the gas-injection molding (aka gas-assisted injection molding or internal gas-pressure method). In either technique, two different components are introduced into each other. A polymer melt is injected into the cavity first, and followed by the injection of the second component. The second component then expands inside the melt. With the sandwich process, the second component also consists of a polymer, thus creating a sandwich structure, comprised of an inner core, covered by an outer skin. With the gas-injection technique, an inert gas (e.g., nitrogen) is employed as the second component, thereby creating a hollow body.

In some embodiments, the injection molding process is soluble core molding. In this process, a core (usually molded of a low melting alloy or water-soluble thermoplastics or wax formulations, etc.) is inserted into the injection mold cavity. This core can be of thin walled or solid construction. After the plastic solidifies, the core is removed by applying a temperature below the melting point of the plastic and above the melting point of the core. Core material is poured through a hole drilled in the plastic or through an existing opening. The collected core material can be used for making a new core.

In certain embodiments, the injection molding process is insert molding which is a process by which components such as pins, studs, terminals, devices and fasteners may be molded in a part to eliminate the expense of postmolding, protection, preservation and so on.

In some embodiments, the injection molding process is liquid injection molding which involves proportioning, mixing and dispensing two liquid plastic formulations. Compound is directed into a closed mold. Liquid injection molding differs from reaction injection molding. Liquid injection molding may use mechanical mixing whereas reaction injection molding may use high-pressure impingement mixer.

In certain embodiments, the injection molding process is gas counterflow molding which is also known as gas counter pressure molding. A conventional injection molding system is used with a separate entrance to the mold cavity providing gas *(e.g.,* nitrogen) pressurization prior to injection the melt shot. Back pressure in the cavity can provide an even distribution of melt package during its cooling cycle. When producing foamed plastic parts, this gas back pressure prevents the blowing agent from expanding until its part skins can form on the cavity surfaces where the gas is vented.

In some embodiments, the injection molding process is melt counterflow molding which uses two separate injection units or one unit with a melt-splitting device, so that the melt flow within the cavity arrives from different directions, this may result in complete elimination of any weld line.

The polymers or polymer compositions can be used to prepare the eyewear frames by other known polymer processes such as extrusion (e.g., sheet extrusion and profile extrusion), molding, and rotational molding. In general, extrusion is a process by which a polymer is propelled continuously along a screw through regions of high temperature and pressure where it is melted and compacted, and finally forced through a die. The extruder can be a single screw extruder, a multiple screw extruder, a disk extruder or a ram extruder. The die can be profile extrusion die. The extrusion of polymers has been described in C. Rauwendaal, "Polymer Extrusion", Hanser Publishers, New York, NY (1986); and M.J. Stevens, "Extruder Principals and Operation," Ellsevier Applied Science Publishers, New York, NY (1985), both of which are incorporated herein by reference in their entirety.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

1. An eyewear assembly comprising a main frame and a secondary frame, wherein the main frame comprises a frame front, a pair of temples and two or more first magnets separately embedded below the surface of the frame front, each of the temples pivotally attached to the frame front; wherein the secondary frame comprises two or more second magnets separately embedded below the surface of the secondary frame, wherein the secondary frame is removably secured to the main frame by magnetic engagement between the first magnets and the second magnets, and wherein the main frame and the secondary frame are free of cover parts for covering the first magnets and the second magnets respectively.

2. The eyewear assembly of claim 1, wherein the two or more first magnets are embedded below the surface of the frame front by injection molding and the two or more second magnets are embedded below the surface of the secondary frame by injection molding.

3. The eyewear assembly of claim 1 or 2, wherein the main frame is a full rim frame or semi-rimless frame, and the secondary frame is a full rim frame, semi-rimless frame or a rimless frame.

4. The eyewear assembly of any one of claims 1-3, wherein the frame front further comprises a pair of nose pads.

5. The eyewear assembly of any one of claims 1-4 further comprising a first pair of lenses mounted on the main frame and a second pair of lenses mounted on the secondary frame.

6. The eyewear assembly of any one of claim 1-5, wherein each of the first magnets and the second magnets is independently selected from neodymium magnets, bonded neo magnets, samarium-cobalt magnets, alnico magnets, ferrite magnets, exchange spring magnets, magnets made from Mitsujima ka magnetic steel, and combinations thereof.

7. The eyewear assembly of any one of claim 1-6, wherein the main frame comprises 2 first magnets and the secondary frame comprises 2 second magnets.

8. The eyewear assembly of claim 7, wherein the 2 first magnets are respectively located in the upper right and upper left portions of the frame front and the 2 second magnets are respectively located in the upper right and upper left portions of the secondary frame.

9. A method of making an eyewear frame, wherein the method comprises the steps of:
a) providing a mold having a cavity, wherein the shape of the cavity corresponds to the shape of the eyewear frame;
b) setting two or more magnets in the mold; and
c) injecting a melt of a polymer composition into the cavity to form the eyewear frame,
wherein the two or more magnets are embedded below the surface of the eyewear frame, wherein the magnets have no pattern or image, and wherein the eyewear frame is free of cover parts for covering the two or more magnets.

10. The method of claim 9, wherein the method further comprises a step of coating the magnets with a lamination agent before the injecting step.

11. The method of claim 9 or 10, wherein the method further comprises a step of setting a patterned layer together with the magnets in the mold before the injecting step.

12. The method of any one of claims 9-11, wherein the polymer composition comprises a polymer which is a cellulose ester, a polycarbonate, a polyurethane, a thermoplastic elastomer (TPE), a polyamide or nylon, a polyester, a copolyester or a combination thereof.

13. The method of any one of claims 9-12, wherein each of the magnets is independently selected from neodymium magnets, bonded neo magnets, samarium-cobalt magnets, alnico magnets, ferrite magnets, exchange spring magnets, magnets made from Mitsujima ka magnetic steel, and combinations thereof.

14. A method of making an eyewear frame, wherein the method comprises the steps of:
a) providing a top layer comprising a first pair of cavities, wherein the shape of the top layer corresponds to the shape of the top part of the eyewear frame;
b) providing a bottom layer comprising a second pair of cavities, wherein the shape of the bottom layer corresponds to the shape of the bottom part of the eyewear frame;
c) embedding a pair of magnets in the first pair of cavities and the second pair of cavities; and
d) bonding the top layer and the bottom layer together by applying an adhesive substance, heat, pressure or a combination thereof,
wherein the magnets are embedded below the surface of the eyewear frame, wherein the magnets have no pattern or image, and wherein the eyewear frame is free of cover parts for covering the magnets.

15. The method of claim 14, wherein each of the magnets is independently selected from neodymium magnets, bonded neo magnets, samarium-cobalt magnets, alnico magnets, ferrite magnets, exchange spring magnets, magnets made from Mitsujima ka magnetic steel, and combinations thereof.
